# EUROPÄISCHE PATENTANMELDUNG

(11) **EP 0 753 343 A2**
(43) Veröffentlichungstag der Anmeldung: **15.01.1997**
(21) Anmeldenummer: 96111110.1
(22) Anmeldetag: 10.07.1996
(51) Int. Cl.: B01J 3/04, B01J 3/02

(54) **Autoklav zur Herstellung von Kunststoffen**

(30) Priorität: 13.07.1995 DE 19525563
(71) Anmelder: RIETER AUTOMATIK GmbH, D-63762 Grossostheim (DE)
(72) Erfinder: Locker, Peter, 63762 Grossostheim (DE)
(74) Vertreter: Bardehle, Heinz, Dipl.-Ing.

(57) **Zusammenfassung**

Die Erfindung betrifft einen Autoklaven mit daran angeschlossenem Austragsorgan zur Herstellung von Kunststoffen. Das Austragsorgan ist mindestens teilweise in die Wandung des Autoklaven derart einbezogen, daß der im Autoklav befindliche Kunststoff über dessen Wandung unmittelbar in das Austragsorgan und eine in diesem angeordnete Absperrvorrichtung fließt.

## Beschreibung

Die Erfindung bezieht sich auf einen Autoklav mit daran angeschlossenem Austragsorgan zur Herstellung von Kunststoffen.

Ein Autoklav für die Trocknung von stückigem oder körnigem Schüttgut, der eine verschließbare Austragsöffnung aufweist, ist aus der DE-PS 34 09 397 bekannt. Die Austragsöffnung ist dabei durch einen in den Innenraum des Autoklaven reichenden Deckel abgeschlossen, der bei seinem Abheben von der Austragsöffnung weiter in den Innenraum angehoben wird. Eine Anwendung dieses Prinzips ist für einen mit einer Kunststoffschmelze gefüllten Autoklaven nachteilig, da für den Fall der Öffnung des Autoklaven das Abheben des Deckels in die flüssige Kunststoffmasse hinein deren gleichmäßigen Fluß behindert, insbesondere wegen des den Deckel betätigenden Stößelmechanismus, der durch das strömende Gut hindurchgreifen muß.

Der Erfindung liegt die Aufgabe zugrunde, dem Austragsorgan eine günstige Lage in Bezug zu dem Autoklav zu geben. Erfindungsgemäß geschieht dies dadurch, daß das Austragsorgan mindestens teilweise in die Wandung des Autoklaven derart einbezogen ist, daß der im Autoklav befindliche Kunststoff über dessen Wandung unmittelbar in das Austragsorgan und eine in diesem angeordnete Absperrvorrichtung fließt.

Durch die Einbeziehung des Austragsorgans in die Wandung ergibt sich für den in das Austragsorgan fließenden Kunststoff praktisch kein Be-reich, in dem dieser nicht in den im Autoklaven selbst herrschenden Verhältnissen ausgesetzt ist, z.B. dem Einfluß eines darin befindlichen Rührwerks. Außerdem wird durch die Einbeziehung des Austragsorgans in die Wandung des Autoklaven die Beheizung des Austragsorgans verbessert. Ein sonst üblicher zum Austragsorgan führender Austragskanal kann vermieden werden, der sich auf das Fließverhalten des Kunststoffs ungünstig auswirken würde. Der im Bereich des Austragsorgans fließende Kunststoff wird dabei den im Autoklaven herrschenden Verhältnissen praktisch nicht entzogen, da das Kunststoffmaterial von Autoklaven unmittelbar in das Austragsorgan fließt. Dabei führt die Vermeidung eines Austragskanals dazu, daß für dessen Überwindung kein erhöhter Druck im Autoklaven für das Austragen des Kunststoffs erforderlich ist, was auf eine entsprechende Energieeinsparung hinausläuft.

In den Figuren sind Ausführungsbeispiele der Erfindung dargestellt. Es zeigen
- Fig. 1: die Anordnung eines Autoklaven mit dem in seine Wandung einbezogenen Austragsorgan bei senkrechter Anordnung des Autoklaven,
- Fig. 2: eine Abwandlung der Anordnung gemäß Figur 1 mit einem in Schräglage angeordneten Autoklaven.
- Fig. 3: eine graphische Gegenüberstellung des Flüssigkeitsspiegels im Falle senkrechter und schräger Anordnung des Autoklaven,

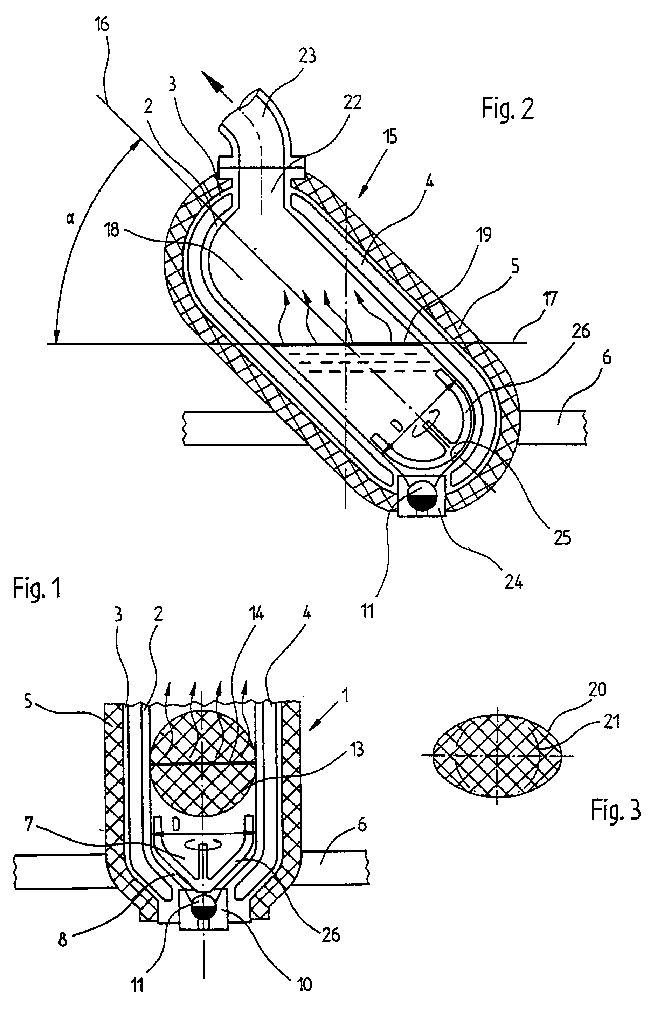

Figur 1 zeigt einen als zylindrisches Druckgefäß ausgebildeten Autoklaven 1, der durch die Innenwand 2 und die Außenwand 3 gestaltet ist. Zwischen der Innenwand 2 und der Außenwand 3 ist der Heizraum 4 angeordnet. Die Außenwand 3 wird von der Isolation 5 eingeschlossen. Der Innenraum des Autoklaven 1 geht über den Ablauftrichter 8 in das Austragsorgan 10 über, das die Absperrvorrichtung 11 enthält, die wahlweise geöffnet oder geschlossen werden kann. In dem dargestellten Austragsorgan 10 ist die Absperrvorrichtung als drehbarer Ventilkörper mit halbkreisförmigem Querschnitt ausgebildet. Der Autoklav 1 ist in eine horizontale Gebäudedecke 6 eingebaut.

Aufgrund der Einbeziehung des Austragsorgans 10 in die Wandung des Autoklaven 1, bestehend aus Innenwand 2, Außenwand 3 und Isolation 5, ergibt sich die unmittelbare Verbindung von Trichter 8 mit dem Austragsorgan 10 ohne die sonst übliche Unterbrechung durch einen Auslaßkanal, so daß die im Innenraum 7 des Autoklaven 1 herrschenden Verhältnisse sich praktisch bis in das Austragsorgan 10 auswirken. Insbesondere ergibt sich bei der in der Figur 1 dargestellten Gestaltung die Mitbeheizung des Austragsorgans 10 von dem Heizraum 4 her, so daß an einer gegebenenfalls erforderlichen Beheizung der Absperrvorrichtung 10 ein wesentlicher Anteil eingespart werden kann. Darüberhinaus wird der Abfluß des Kunststoffmaterials aus dem Innenraum 7 des Autoklaven 1 insofern erleichtert, als das Kunststoffmaterial auf kürzestem Wege zu dem Austragsorgan 10 gelangt.

Figur 2 zeigt die Anordnung eines Autoklaven 15, dessen durch die strichpunktierte Linie 16 dargestellte Achse gegenüber der Horizontalen 17 den Winkel α einschließt und somit eine entsprechende Schräglage einnimmt. Aufgrund dieser Schräglage bildet sich bei einer im Innenraum 18 befindlichen Kunststoffmenge ein Flüssigkeitsspiegel 19 aus, der dem in Figur 3 dargestellten Oval 20 entspricht. In das in der Figur 3 dargestellte Oval 20 ist strichpunktiert der Kreis 21 eingezeichnet, der der den Flüssigkeitsspiegel 14 in Fig. 1 darstellenden Kreisfläche 13 gemäß Figur 1 entspricht, da die in den Figuren 1 und 2 dargestellten Autoklaven 1 und 15 den gleichen Innendurchmesser D besitzen. Aus der Figur 3 geht deutlich die Vergrößerung der Fläche des Flüssigkeitsspiegels im Autoklaven 15 gegenüber derjenigen des Autoklaven 1 hervor. Aufgrund ihrer Oberflächenvergrößerung wird es den flüchtigen Bestandteilen der im Autoklaven 15 enthaltenen Kunststoffflüssigkeit erleichtert, über den Flüssigkeitsspiegel 19 zu entweichen (siehe die eingezeichneten Pfeile). Diese flüchtigen Bestandteile werden am oberen Ende des Autoklaven 15 in dem Auslaß 22 gesammelt und über das Auslaßrohr 23 in üblicher Weise abgeleitet. Dabei kann es sich um eine drucklose Ableitung oder um ein Absaugen durch Vakuum handeln.

Der Autoklav 15 ist wie der in der Figur 1 dargestellte Autoklav 1 in eine Decke 6 eines Gebäudes eingebaut. Er weist außerdem in bekannter Weise die Innenwand 2 und die Außenwand 3 auf, zwischen denen sich der Heizraum 4 befindet. Außerdem ist die Isolierung 5 vorgesehen. Es sei noch darauf hingewiesen, daß der Autoklav 15 in bekannter Weise ein Rührwerk 26 enthält, dessen Antrieb nicht dargestellt ist, da es sich hierbei um Stand der Technik handelt. Ein solches Rührwerk sorgt für eine ständige Durchmischung des Kunststoffmaterials und damit verbunden eine verbesserte Abscheidung der flüchtigen Bestandteile.

Aufgrund der Schräglage des Autoklaven 15 ergibt sich an dessen unterem Ende aufgrund der zylindrischen Innenwandung 2 und dem im wesentlichen radialsymmetrischen, abgerundeten Boden 25 eine Art Trichter, so daß das im Innenraum 18 befindliche Kunststoffmaterial automatisch die Tendenz erhält, der untersten Stelle im Autoklaven 15 zugeführt zu werden. An dieser untersten Stelle ist in die Wandung des Autoklaven 15, bestehend aus Innenwand 2, Außenwand 3 und Isolierung 5 das Austragsorgan 24 eingesetzt, das somit in diese Wandung einbezogen ist. Damit ergibt sich für das Austragen des Kunststoffs aus dem Autoklaven 15 ein besonders kurzer Weg. Das Austragsorgan enthält wie bei der Gestaltung gemäß Figur 1 eine Absperrvorrichtung 11, die aus einem drehbaren Ventilkörper mit halbkreisförmigen Querschnitt besteht.

## Patentansprüche

1. Autoklav (1,15) mit daran angeschlossenem Austragsorgan (10) zur Herstellung von Kunststoffen, **dadurch gekennzeichnet**, daß das Austragsorgan (10) mindestens teilweise in die Wandung (2,3,5) des Autoklaven (1,15) derart einbezogen ist, daß der im Autoklav (1,15) befindliche Kunststoff über dessen Wandung (2,3,5) unmittelbar in das Austragsorgan (10) und eine in diesem angeordnete Absperrvorrichtung (11) fließt.

2. Autoklav (1), der im wesentlichen als zylindrisches Druckgefäß ausgebildet ist, **dadurch gekennzeichnet**, daß der Autoklav (1) stationär mit derartiger Schräglage angeordnet ist, daß die Oberfläche des im Autoklaven (1) gebildeten Flüssigkeitsspiegels (17) gegenüber demjenigen bei senkrechter Anordnung wesentlich, vorzugsweise um etwa das 1,5-fache, vergrößert ist und im Bereich des Übergangs seines Bodens (25) in die zylindrische Wandung (2) des Autoklaven (1) das Austragsorgan (24) angeordnet ist.
